# EUROPEAN PATENT APPLICATION

(11) **EP 2 133 685 A1**
(43) Date of publication of application: **16.12.2009**
(21) Application number: 08722354.1
(22) Date of filing: 18.03.2008
(51) Int. Cl.: G01N 21/11, G01N 21/05, G01N 21/27

(54) **MEASURING APPARATUS**

(30) Priority: 19.03.2007 JP 2007071024
(71) Applicant: Fujifilm Corporation, Tokyo 106-8620 (JP)
(72) Inventor: SAKAGUCHI, Yasunobu, Ashigarakami-gun Kanagawa 258-0023 (JP)
(74) Representative: Klunker . Schmitt-Nilson . Hirsch
(86) International application number: PCT/JP2008/054960
(87) International publication number: WO 2008/114789

(57) **Abstract**

A measuring apparatus which can replace a solution in a channel with a small liquid quantity is provided. A channel member is formed in which a channel thorough which liquid can flow, and a testing substance to be measured is adhered on a wall surface in the channel. At a time of replacing the solution in the channel, the solution is supplied to the channel in a prescribed quantity corresponding to an amount of the channel at a first speed, thereafter, the supply is stopped for a prescribed time corresponding to diffusion of solution in a vicinity of the wall surface in the channel to a center part of a cross-section of the channel, and thereafter the solution is supplied at a third speed.

## Description

### TECHNICAL FIELD

The present invention relates to a measurement apparatus, and particularly relates to a measurement apparatus that is provided with a measurement chip in which a channel through which a liquid can flow is formed and in which a testing substance to be measured is adhered to a side wall in the channel.

### BACKGROUND ART

Heretofore, a measurement apparatus has been known that, with a measurement chip in which a channel through which a liquid can flow is formed and in which a testing substance to be measured is adhered to a side wall in the channel, measures characteristics of the testing substance by respectively separately supplying various solutions to the channel of the measurement chip and detecting reaction states of the testing substance.

For example, in Patent Document 1: Japanese Patent Application Laid-Open No. 2006-98369, a measurement apparatus is disclosed that measures characteristics of a testing substance by: respectively separately supplying various solutions to channels; causing light beams to be incident at various angles with respect to surfaces of adherence portions at which the testing substance is adhered, and detecting light intensity distributions for respective reflection angles of totally reflected light beams; and detecting, from the detected light intensity distributions, reflection angles at which dark lines occur due to occurrences of attenuated total reflection, which are caused by surface plasmon resonance (Surface Plasmon Resonance: SPR).

### DISCLOSURE OF INVENTION

### PROBLEM TO BE SOLVED BY THE INVENTION

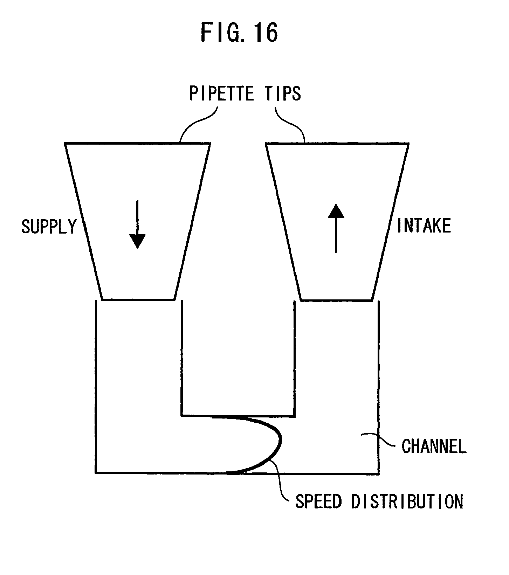

Now, as illustrated in Fig. 16, when a solution flows in a channel of a measurement chip, flow of the solution within the channel is in a layered flow state. Consequently, the closer to the wall face in the channel, the slower the speed of the liquid.

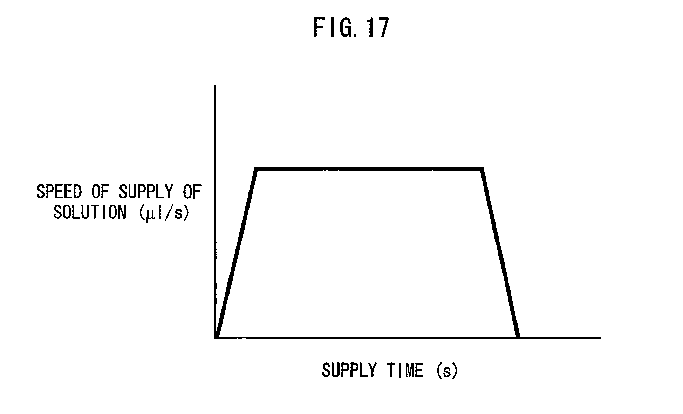

Therefore, in a measurement apparatus of this type, at a time of replacing a solution in the channel, as illustrated in Fig. 17, replacement of the solution in the channel is implemented by flowing a solution for a prescribed time (for example, five seconds) at a certain speed, but a liquid quantity of the solution that is required for replacing the solution in the channel is large, which has been a problem.

In light of the above, the present invention will provide a measurement apparatus capable of replacing a solution in a channel with a small liquid quantity.

### MEANS FOR SOLVING THE PROBLEM

A first aspect of the present invention provides a measurement apparatus that is provided with: a channel member in which a channel through which liquid can flow is formed and in which a testing substance to be measured is adhered on a wall surface in the channel; a supply unit that supplies to the channel a solution to be used in testing of a characteristic of the testing substance; and a control section that, at a time of replacing the solution in the channel, controls the supply unit so as to supply the solution to the channel in a prescribed quantity at a first speed, thereafter supply the solution for a prescribed time at a second speed which is slower than the first speed, and thereafter supply the solution at a third speed which is faster than the second speed.

According to the constitution described above, the channel through which liquid can flow is formed in the channel member, the testing substance that is a measurement subject is adhered at the side wall in the channel, and solutions to be used in measurement of characteristics of the testing substance are supplied to the channel by the supply unit.

At the time of replacing a solution in the channel, the supply unit is controlled by the control section so as to supply a solution to the channel in the prescribed quantity at the first speed, then supply it for the prescribed time at the second speed, which is slower than the first speed, and thereafter supply it at the third speed, which is faster than the second speed.

Thus, at the time of replacing a solution in the channel of the channel member, in which the channel through which liquid can flow is formed and in which the testing substance to be measured is adhered on the side wall in the channel, the solution is supplied to the channel in the prescribed quantity at the first speed, then supplied for the prescribed time at the second speed, which is slower than the first speed, and thereafter supplied at the third speed, which is faster than the second speed. Thus, the solution in the channel may be replaced with a small liquid quantity.

Herein, at the time of replacing a solution in the channel, the control section may control the supply unit so as to supply the solution to the channel in the prescribed quantity at the first speed, then stop the supply for the prescribed time, and thereafter supply it at the third speed.

It is preferable if the prescribed time is a time corresponding to diffusion of solution in a vicinity of the wall surface in the channel to the center part of a cross-section of the channel.

Further, it is preferable if the prescribed quantity is a quantity that replaces solution at least from a supply aperture of the channel at which the solution is supplied to an adherence portion at which the testing substance is adhered.

Further yet, the supply unit may be configured to respectively separately supply to the channel plural kinds of solution to be used in measurements of characteristics of the testing substance, and the control section configured to perform the control at a time of replacing a solution in the channel with a solution of a different kind.

Furthermore, according to a second aspect of the present invention, a measurement apparatus is provided that is provided with: a channel member in which a channel through which liquid can flow is formed and in which a testing substance to be measured is adhered on a wall surface in the channel; a supply unit that supplies to the channel a solution to be used in testing of a characteristic of the testing substance; and a control section that, at a time of supplying the solution from the supply unit and replacing the solution in the channel, controls the supply unit so as to, partway through supplying the solution, stop the supply of the solution for a prescribed time.

According to the constitution described above, the channel through which liquid can flow is formed in the channel member, the testing substance that is a measurement subject is adhered at the side wall in the channel, and solutions to be used in measurement of characteristics of the testing substance are supplied to the channel by the supply unit.

At the time of supplying a solution from the supply unit and replacing a solution in the channel, the supply unit is controlled by the control section so as to, partway through supplying the solution, stop the supply of the solution for the prescribed time.

Thus, at the time of replacing the solution in the channel of the channel member, in which the channel through which liquid can flow is formed and in which a testing substance to be measured is adhered on the side wall in the channel, the supply of solution is stopped for the prescribed time partway through supplying the solution. Therefore, the solution in the channel may be replaced with a small liquid quantity.

### EFFECT OF THE INVENTION

Thus, according to the aspects of the present invention, a solution in a channel may be replaced in a small liquid quantity.

### BRIEF DESCRIPTION OF THE DRAWINGS

Fig. 1 is a perspective view of the whole of a biosensor relating to an exemplary embodiment.
Fig. 2 is a perspective view of the interior of the biosensor relating to the exemplary embodiment.
Fig. 3 is a plan view of the interior of the biosensor relating to the exemplary embodiment.
Fig. 4 is a side view of the interior of the biosensor relating to the exemplary embodiment.
Fig. 5 is a perspective view of a measurement chip relating to the exemplary embodiment.
Fig. 6 is an exploded perspective view of the measurement chip relating to the exemplary embodiment.
Fig. 7 is a view illustrating a state in which a light beam is incident on a measurement region and a reference region of the measurement chip relating to the exemplary embodiment.
Fig. 8 is a view in which a channel member of the measurement chip relating to the exemplary embodiment is seen from a lower side.
Fig. 9 is a perspective view illustrating a vertical driving mechanism of an infusion head of the biosensor relating to the exemplary embodiment.
Fig. 10 is a schematic structural diagram of a liquid pumping section of the biosensor relating to the exemplary embodiment.
Fig. 11 is a a schematic diagram of a vicinity of an optical measurement section of the biosensor relating to the exemplary embodiment.
Fig. 12 is a schematic block diagram of a control section of the biosensor relating to the exemplary embodiment and peripherals thereof.
Fig. 13 is a graph showing speeds of a solution that is supplied to a liquid channel relating to the exemplary embodiment.
Fig. 14A is a (first) schematic view illustrating a state in replacement of a solution in the liquid channel relating to the exemplary embodiment.
Fig. 14B is a (second) schematic view illustrating a state in replacement of the solution in the liquid channel relating to the exemplary embodiment.
Fig. 14C is a (third) schematic view illustrating a state in replacement of the solution in the liquid channel relating to the exemplary embodiment.
Fig. 14D is a (fourth) schematic view illustrating a state in replacement of the solution in the liquid channel relating to the exemplary embodiment.
Fig. 15 is a graph illustrating a different example of speeds of the solution that is supplied to the liquid channel.
Fig. 16 is a diagram illustrating an example of a measurement chip in which a channel is formed.
Fig. 17 is a graph illustrating speed of a solution that is supplied to a conventional liquid channel.

### BEST MODE FOR CARRYING OUT THE INVENTION

Herebelow, an exemplary embodiment of the present invention will be described while referring to the drawings.

A biosensor 10, which serves as a measurement apparatus relating to the present exemplary embodiment, is a surface plasmon sensor that measures interaction of a protein Ta with a sample A, using surface plasmon resonance that occurs at a surface of a metallic film.

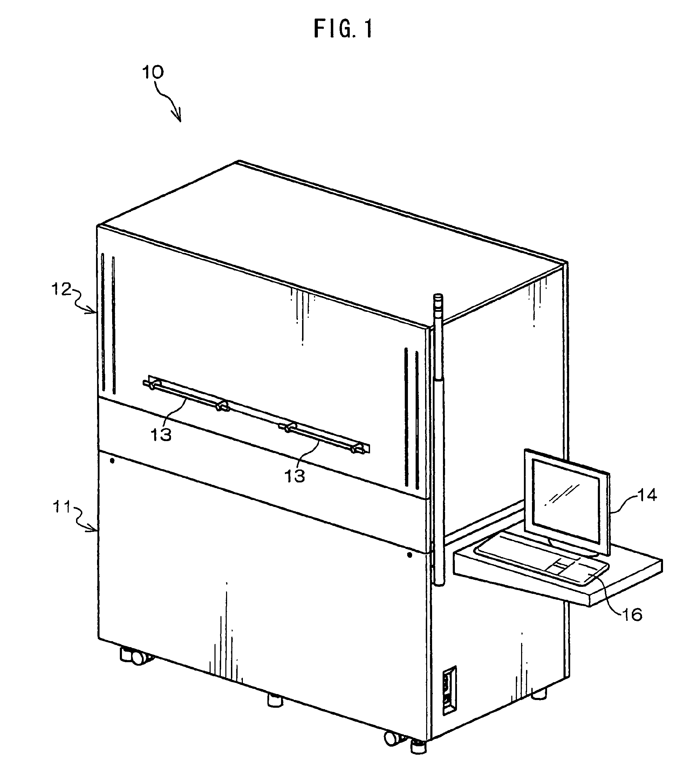

As shown in Fig. 1 to Fig. 4, the biosensor 10 is provided with a lower case 11 and an upper case 12. The upper case 12 is structured with thermal insulating members and covers the whole of an upper half of the biosensor 10. The interior of the upper case 12 is thermally insulated from the exterior and from the interior of the lower case 11. Handles 13, which are configured to enable upward opening, are attached to a front side of the upper case 12. A display 14 and an input section 16 are disposed at the outside of the upper case 12.

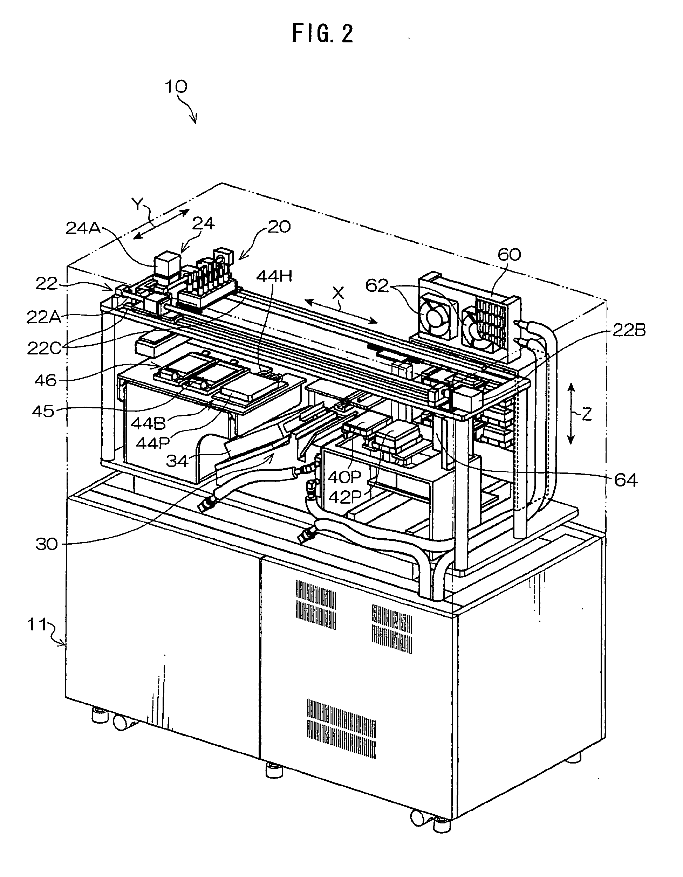

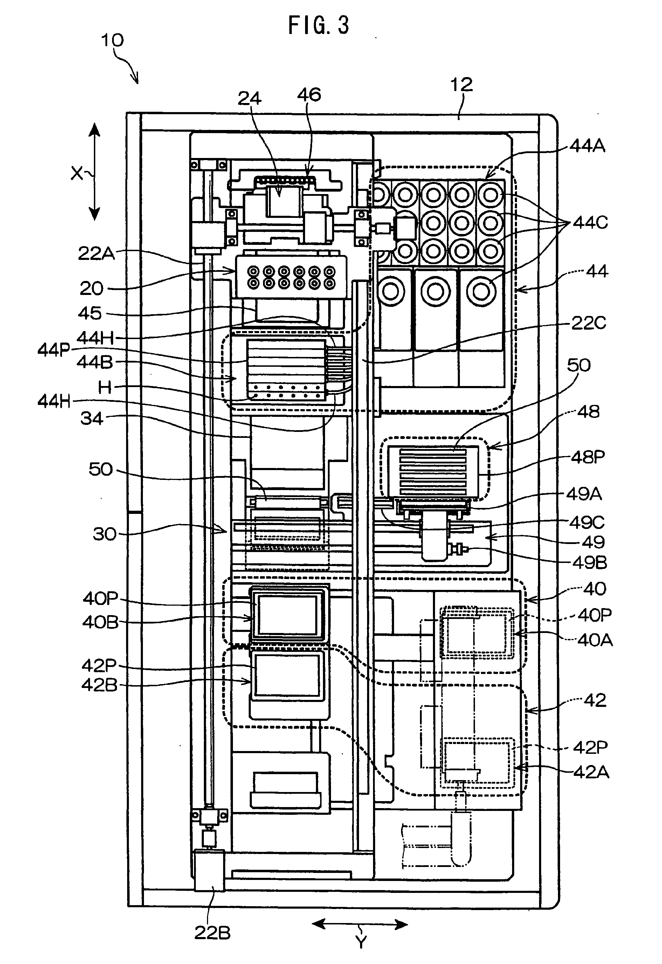

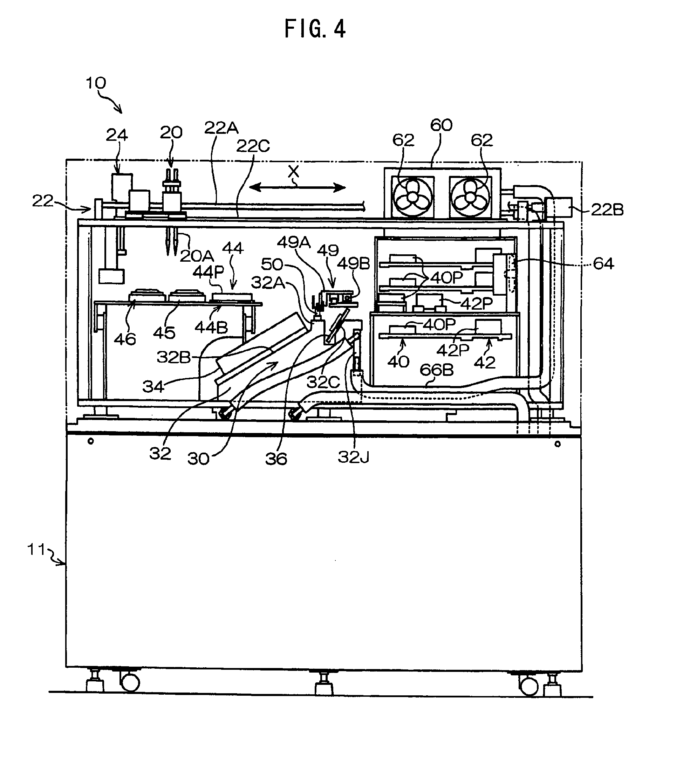

Fig. 2 is a view illustrating the interior of the biosensor 10 seen from the rear side of Fig. 1 with the upper case 12 removed. Fig. 3 is a view in which the interior of the casing is seen from above, and Fig. 4 is a side view of the interior seen from the front side of Fig. 2.

Inside the upper case 12, an infusion head 20, a measurement section 30, a sample stock section 40, a pipette tip stock section 42, a buffer stock section 44, a cooling section 46, a measurement chip stock section 48, a radiator 60, a radiator air-blowing fan 62, and a horizontal-direction air-blowing fan 64 are provided.

The sample stock section 40 is constituted with a sample stacking section 40A and a sample setting section 40B. In the sample stacking section 40A, sample plates 40P are stacked in a Z direction (a vertical direction) and accommodated. The sample plates 40P stock respectively different analyte solutions as samples to be used in measurements of characteristics of testing substances in individual cells. One of the sample plates 40P is conveyed from the sample stacking section 40A to the sample setting section 40B by an unillustrated conveyance mechanism and is set in place therein.

The pipette tip stock section 42 is constituted with a pipette tip stacking section 42A and a pipette tip setting section 42B. In the pipette tip stacking section 42A, pipette tip stockers 42P, which retain plural pipette tips, are stacked in the Z direction and accommodated. One of the pipette tip stockers 42P is conveyed from the pipette tip stacking section 42A to the pipette tip setting section 42B by an unillustrated conveyance mechanism and is set in place therein.

The buffer stock section 44 is constituted with a bottle accommodation section 44A and a buffer supply section 44B. In the bottle accommodation section 44A, a plural number of bottles 44C are accommodated. The bottles 44C retain buffer fluids which serve as reference samples that are references for measurement. A buffer plate 44P is set in place in the buffer supply section 44B. The buffer plate 44P is divided into plural strips, and buffer fluids with different concentrations are retained in the respective divisions. Holes H are structured in an upper portion of the buffer plate 44P. Pipette tips CP are inserted into the holes H at a time of access by the infusion head 20. Buffer fluid is supplied to the buffer plate 44P from the bottles 44C by hoses 44H.

A correction plate 45 is disposed adjacent to the buffer supply section 44B, and the cooling section 46 is disposed adjacent thereto. The correction plate 45 is a plate for implementing adjustments of concentrations of buffer fluids, and is structured with plural cells in the form of a matrix. Samples requiring cooling are disposed in the cooling section 46. The cooling section is set to a low temperature, and the samples thereon are maintained in a low temperature state.

A measurement chip accommodation plate 48P is set in place at the measurement chip stock section 48. A plural number of measurement chips 50 are stored in the measurement chip accommodation plate 48P.

A measurement chip conveyance mechanism 49 is provided between the measurement chip stock section 48 and the measurement section 30. The measurement chip conveyance mechanism 49 is structured to include a retention arm 49A, which nips and retains a measurement chip 50 from two sides, a ball-screw 49B which, by turning, moves the retention arm 49A in a Y direction, and a conveyance rail 49C, which is arranged in the Y direction and on which the measurement chip 50 is placed. At a time of measurement, a single measurement chip 50 is placed on the conveyance rail 49C from the measurement chip accommodation plate 48P by the measurement chip conveyance mechanism 49, is moved toward the measurement section 30 while being nipped by the retention arm 49A, and is set in place.

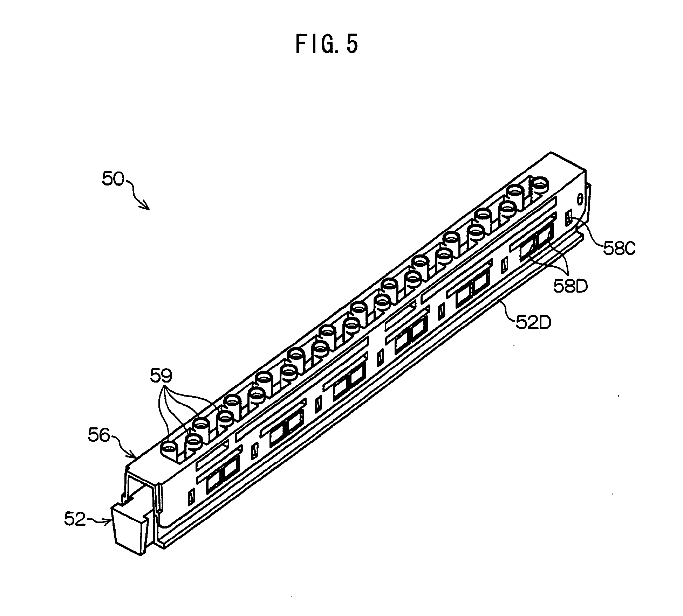

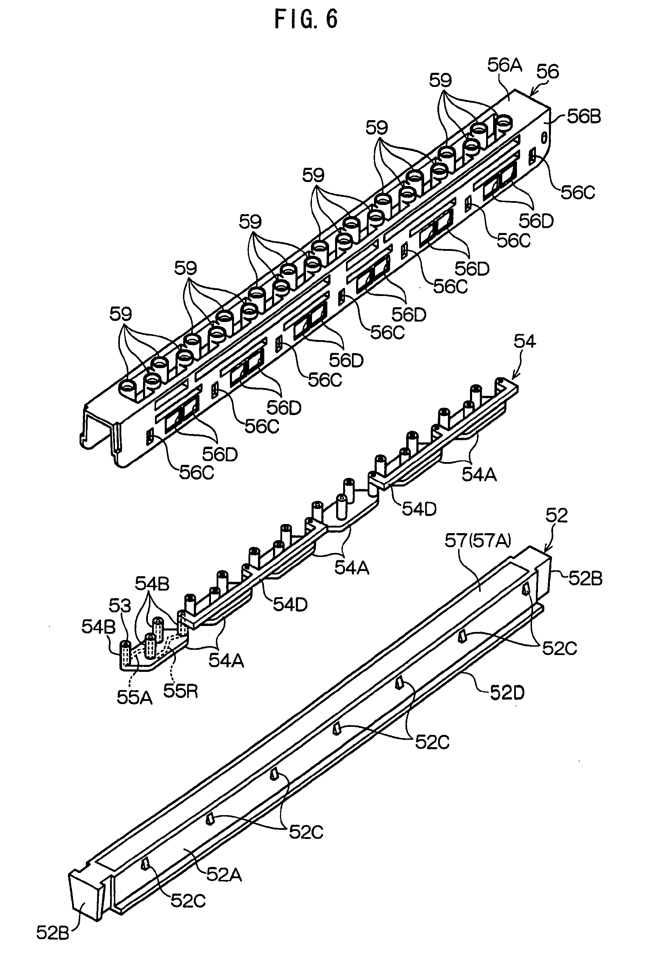

As shown in Fig. 5 and Fig. 6, the measurement chip 50 is structured with a dielectric block 52, a channel member 54 and a retention member 56.

The dielectric block 52 is constituted with a transparent resin or the like that is transparent to light beams, and is provided with a prism portion 52A, which is a bar shape of which cross sectional profile is trapezoid, and retained portions 52B, which are formed integrally with the prism portion 52A at two end portions of the prism portion 52A. A metallic thin film 57 is formed on an upper face that is the wider of two faces of the prism portion 52A that are parallel to one another. The dielectric block 52 functions as what is known as a prism. At a time of measurement in the biosensor 10, light beams are incident from one of the two side faces of the prism portion 52A that are not parallel to one another, and light beams that are totally reflected at a boundary face of the thin film 57 are emitted from the other of the two side faces.

For adhering a protein Ta, which is a testing substance to be measured, onto the thin film 57, a linker layer 57A is formed at the surface of the thin film 57. The protein Ta is adhered onto this linker layer 57A.

Engaging protrusions 52C, which engage with the retention member 56, are formed along upper side edges at the two side faces of the prism portion 52A. Flange portions 52D, which engage with the conveyance rail 49C, are formed along side edges at the lower side of the prism portion 52A.

As illustrated in Fig. 6, the channel member 54 is provided with six base portions 54A, and four cylindrical members 54B stand erect from each of the base portions 54A. At each set of three base portions 54A, upper portions of ones of the cylindrical members 54B standing erect from each of the base portions 54A are joined by a joining member 54D. The channel member 54 is constituted with a material that is soft and capable of resilient deformation, for example, a noncrystalline polyethylene elastomer. Thus, because the channel member 54 is constituted with a material capable of resilient deformation, closeness of contact thereof with the dielectric block 52 is high, and sealing of liquid channels 55 that are structured between the channel member 54 and the dielectric block 52 is assured.

The retention member 56 is formed as a long strip, and is formed in a shape in which an upper face member 56A and two side face members 56B are structured in a cap shape. In the side face members 56B, engaging holes 56C are formed, which engage with the engaging protrusions 52C of the dielectric block 52, and windows 56D are formed, which partially correspond with light paths of the light beams. The retention member 56 is attached to the dielectric block 52 by the engaging holes 56C and the engaging protrusions 52C engaging. The channel member 54 is formed integrally with the retention member 56, and is disposed between the retention member 56 and the dielectric block 52. Receiving portions 59 are formed at the upper face member 56A at positions corresponding with the cylindrical members 54B of the channel member 54. The receiving portions 59 are formed in substantially cylindrical shapes.

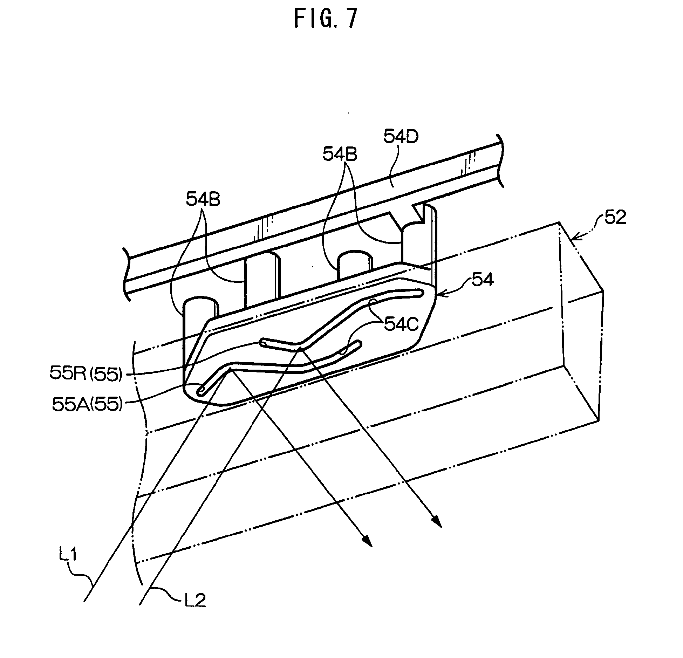

As shown in Fig. 7, two channel grooves 54C, in substantial letter-S shapes in a bottom face view, are formed in the base portion 54A. Each of end portions of the channel grooves 54C is communicated with a central cavity portion of one of the cylindrical members 54B. The bottom face of the base portion 54A is in close contact with the upper face of the dielectric block 52, and the liquid channels 55 are constituted by gaps that are structured between the channel grooves 54C and the upper face of the dielectric block 52 and by the central cavity portions. Herein, the volumes of the liquid channels 55 relating to the present exemplary embodiment are set at 7 µl.

Two of the liquid channels 55 are structured at an individual base portion 54A. At each of the liquid channels 55, entry and exit apertures 53 of the liquid channel 55 are structured at upper end faces of the cylindrical members 54B.

Here, of the two liquid channels 55, one is used as a measurement channel 55A and the other one is used as a reference channel 55R. Measurements are performed in a state in which the protein Ta is adhered on the thin film 57 at the measurement channel 55A (on the linker layer 57A) and the protein Ta is not adhered on the thin film 57 at the reference channel 55R (on the linker layer 57A).

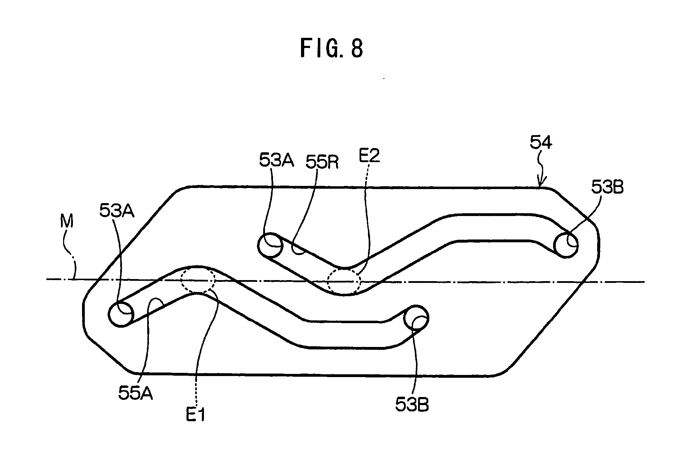

As illustrated in Fig. 7, respective light beams L1 and L2 are incident on the measurement channel 55A and the reference channel 55R. As illustrated in Fig. 8, the light beams L1 and L2 are irradiated at inflection portions of the S shapes that are disposed on a center line M of the base portion 54A. Hereinafter, a region of illumination of the light beam L1 at the measurement channel 55A is referred to as a measurement region E1, and a region of illumination of the light beam L2 at the reference channel 55R is referred to as a reference region E2. The reference region E2 is a region at which measurement is performed for correcting data obtained from the measurement region E1 at which the protein Ta is adhered.

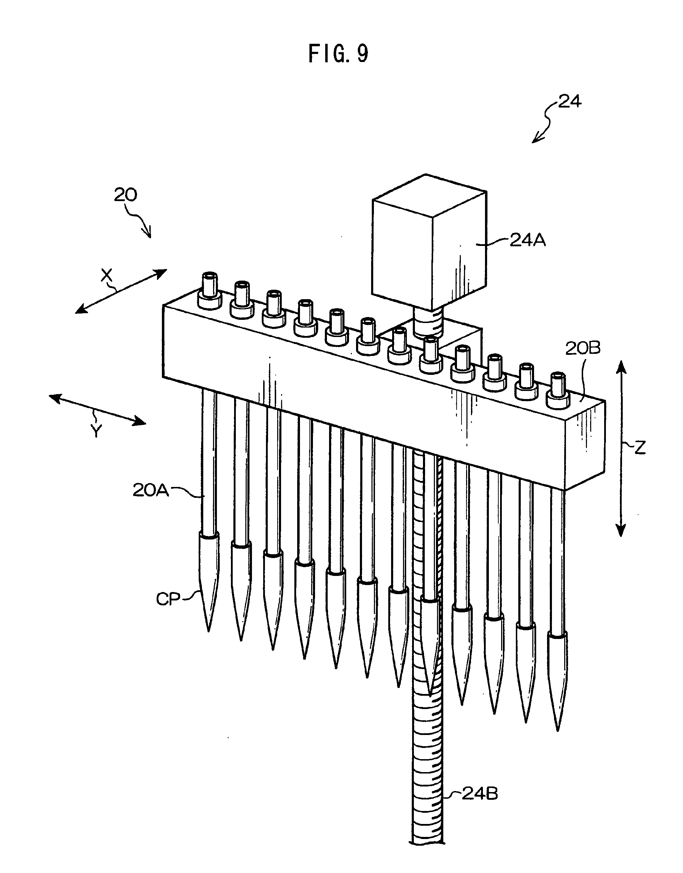

Fig. 9 illustrates detailed structure of the infusion head 20.

The infusion head 20 is provided with twelve infusion tubes 20A. The infusion tubes 20A are retained by a retention member 20B so as to be arranged in a single row along the direction of arrow Y, which is orthogonal to the X direction. The infusion tubes 20A are configured as pairs of two adjacent tubes, one being for liquid supply and the other for liquid discharge. Pipette tips CP are attached to distal end portions of the infusion tubes 20A. The pipette tips CP are stocked in the pipette tip stockers 42P, and may be replaced as necessary.

As shown in Fig. 2, the infusion head 20 is provided at an upper portion of the interior of the upper case 12, and is movable in the direction of arrow X by a horizontal driving mechanism 22. The horizontal driving mechanism 22 is structured by a ball-screw 22A, a motor 22B and guide rails 22C. The ball-screw 22A and guide rails 22C are disposed along the X direction. Two of the guide rails 22C are provided in parallel, one of which is disposed to be separated by a prescribed spacing to the lower side of the ball-screw 22A. The infusion head 20 is moved in the X direction along the guide rails 22C by the ball-screw 22A turning in accordance with rotary driving of the motor 22B. By this X direction movement, the infusion head 20 is movable to, respectively, positions opposing the cooling section 46, the correction plate 45, the buffer supply section 44B (the buffer plate 44P), the measurement section 30 (the measurement chip 50), the sample setting section 40B (the sample plates 40P) and the pipette tip setting section 42B (the pipette tip stockers 42P).

As shown in Fig. 9, a vertical driving mechanism 24, which moves the infusion head 20 in the direction of arrow Z, is provided at the infusion head 20. The vertical driving mechanism 24 is structured to include a motor 24A and a driving shaft 24B disposed in the Z direction. The vertical driving mechanism 24 moves the infusion head 20 in the Z direction by the driving shaft 24B turning in accordance with rotary driving of the motor 24A. By this Z direction movement, the infusion head 20 is made capable of access to the pipette tip stocker 42P set in place at the pipette tip setting section 42B, the sample plate 40P set in place at the sample setting section 40B, the buffer plate 44P set in place at the buffer supply section 44B, the correction plate 45, a plate set in place at the cooling section 46, the measurement chip 50 set in place at the measurement section 30 and so forth.

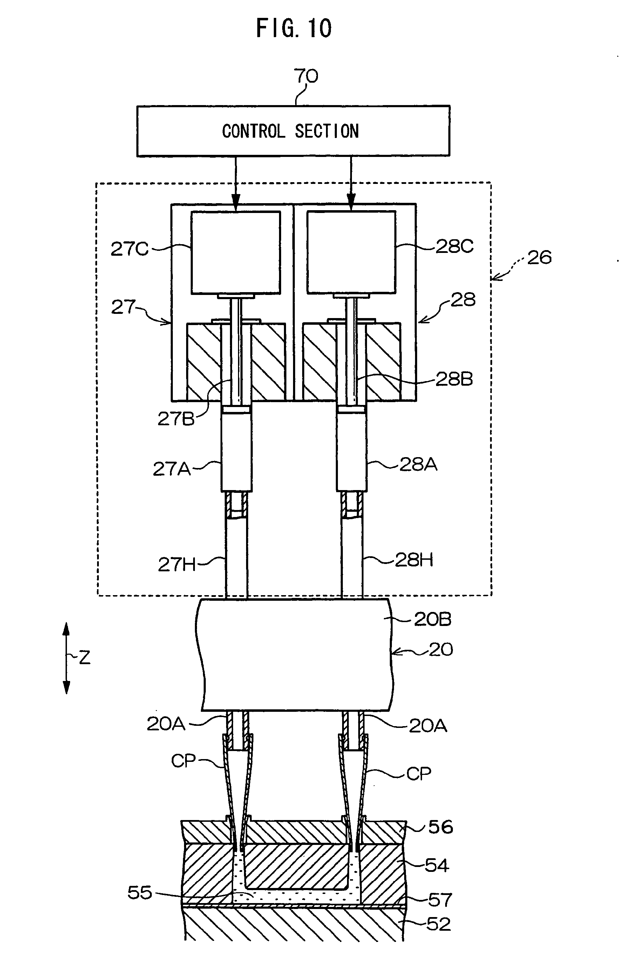

As shown in Fig. 10, a pump driving section 26 is connected to the infusion head 20. The pump driving section 26 is provided with a first pump 27 and a second pump 28. The first pump 27 and the second pump 28 are provided in respective correspondence with the aforementioned pairs of infusion tubes 20A. The first pump 27 is structured by a syringe pump, and is provided with a first cylinder 27A, a first piston 27B, and a first motor 27C that drives the first piston 27B. The first cylinder 27A is connected with the infusion head 20 via piping 27H. The second pump 28 is also structured by a syringe pump, and is provided with a second cylinder 28A, a second piston 28B, and a second motor 28C that drives the second piston 28B. The second cylinder 28A is connected with the infusion head 20 via piping 28H.

Rotary driving of each of the first motor 27C and the second motor 28C is controlled and driving of the first piston 27B and the second piston 28B is controlled. Thus, the infusion head 20 is capable of adjusting liquid quantities of solutions that are aspirated and discharged, and speeds of the solutions during aspiration and discharge.

Meanwhile, as shown in Fig. 4, the measurement section 30 is structured to include an optics table 32, a light emission section 34 and a light reception section 36. At the optics table 32 are formed, as seen from a side direction: an upper pedestal 32A with a horizontal flat face at the middle of an upper portion, an emission inclined portion 32B that descends in a direction away from the upper pedestal 32A, and a light reception inclined portion 32C that is disposed to sandwich the upper pedestal 32A at the opposite side thereof from the emission inclined portion 32B. The measurement chip 50 is set in place on the upper pedestal 32A, along the Y direction. The light emission section 34, which emits the light beams L1 and L2 towards the measurement chip 50, is disposed at the emission inclined portion 32B of the optics table 32. The light reception section 36 is disposed at the light reception inclined portion 32C. A water-cooling jacket 32J, which cools the optics table 32, is provided adjacent to the optics table 32.

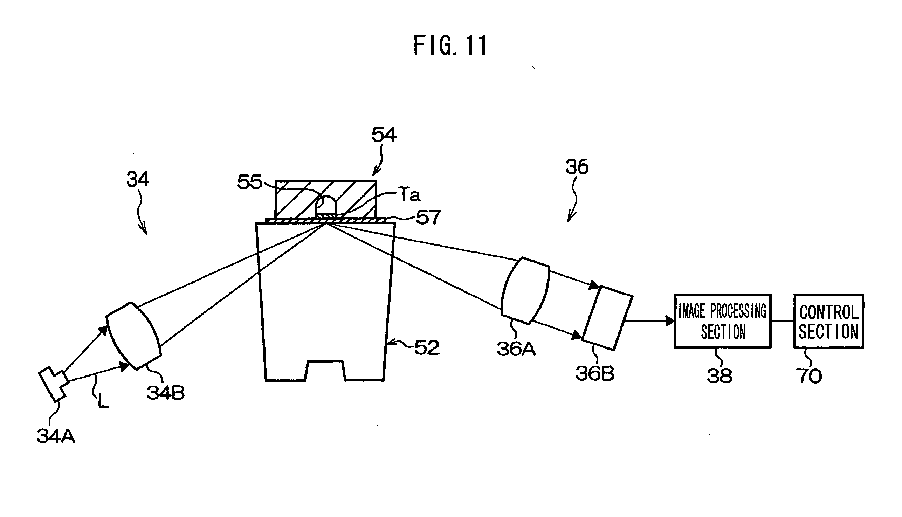

As shown in Fig. 11, a light source 34A and a lens unit 34B are provided at the light emission section 34. At the light reception section 36, a lens unit 36A and a CCD 36B are provided. The CCD 36B is connected with an image processing section 38, to which a control section 70 that administers overall control of the biosensor 10 is connected.

A light beam L in a diverging state is emitted from the light source 34A. The lens unit 34B incorporates a polarizing beam splitter, separates the light beam L that is incident from the light source 34A into a P polarization component and an S polarization component, and divides the P polarization component of the light beam L into two relatively thick parallel light beams L1 and L2 with a certain width with respect to the Z direction. Then the lens unit 34B causes the two parallel light beams L1 and L2 to be incident on the measurement region E1 and the reference region E2 at the boundary face between the thin film 57 and the dielectric block 52, such that the light beams L1 and L2 are in convergent light states at the measurement region E1 and the reference region E2 with various incidence angles that are equal to or more than a total reflection angle. Hence, the light beams L1 and L2 that are incident at the measurement region E1 and the reference region E2 are totally reflected at various reflection angles from the boundary face between the dielectric block 52 and the thin film 57. The totally reflected light beams L1 and L2 are focused through the lens unit 36A at the CCD 36B. The CCD 36B is configured as an area sensor with a light-receiving surface with an area capable of receiving light of both the two totally reflected light beams L1 and L2. The CCD 36B generates and outputs image information representing the images focused at the light-receiving surface. The outputted image information is inputted to the image processing section 38. In the image processing section 38, prescribed processing is carried out on the basis of the inputted image information, and refractive index variation data is calculated for the measurement region E1 and the reference region E2. The calculated refractive index variation data is outputted to the control section 70.

Here, the sample and the buffer liquid are respectively separately provided at the measurement chip 50 and, respectively, the light beam L is emitted from the light emission section 34 and the light beams L1 and L2 are irradiated at the measurement region E1 and the reference region E2. When reflection angles that produce dark lines are respectively found in the light beams L1 and L2 that are totally reflected at the measurement region E1 and the reference region E2, the refractive index variation data is found on the basis of a difference between an angular difference between reflection angles that produce dark lines at the sample and buffer liquid in the measurement region E1 and an angular difference between reflection angles that produce dark lines at the sample and buffer liquid in the reference region E2. The light beams L1 and L2 that are incident at particular incidence angles on the boundary face between the thin film 57 and the dielectric block 52 excite surface plasmons at the boundary face. Accordingly, reflected light intensities of the light beams L1 and L2 that are incident at the particular incidence angles fall sharply and are observed as dark lines. The incidence angles of the light beams L1 and L2 that are dark lines are total reflection attenuation angles θ_{SP}, and the differences in variations (angular differences) between the total reflection attenuation angles θ_{SP} at the measurement region E1 and the reference region E2 serve as the refractive index variation data.

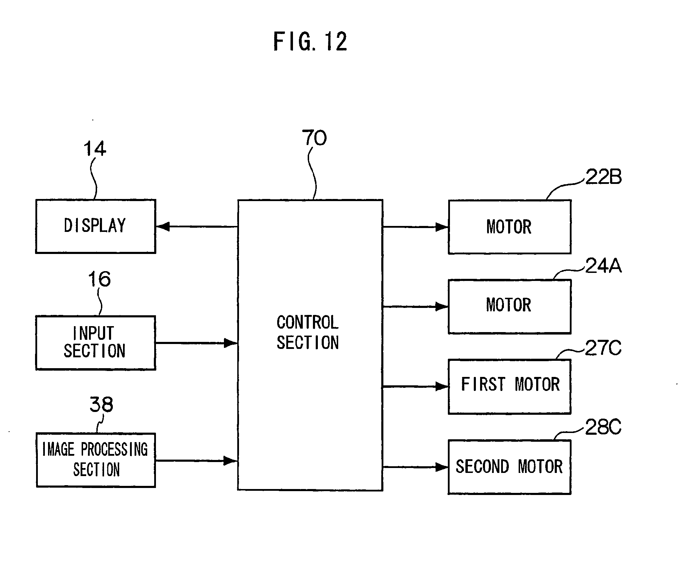

Fig. 12 shows a block diagram illustrating functional structure of a control system that controls operations of the biosensor 10.

As shown in this drawing, the display 14 and the input section 16 are connected to the control section 70.

The aforementioned motor 22B, motor 24A, first motor 27C and second motor 28C are also connected to the control section 70.

The control section 70 controls movement of the infusion head 20 in the X direction and the Z direction by controlling rotary driving of the motor 22B and the motor 24A. The control section 70 also controls aspiration and discharge of the sample and the buffer liquid in the pipette tips CP that are attached to the infusion tubes 20A of the infusion head 20, by controlling rotary driving of the first motor 27C and the second motor 28C.

At the control section 70, in accordance with operation instructions to the biosensor 10 that are inputted by an operator through the input section 16, measurement processing is executed, including infusion of solutions of samples, buffer liquid and the like into the liquid channels 55 of the measurement chip 50, acquisition of refractive index data, and analysis and the like. Further, the control section 70 measures reaction states between the protein Ta and the sample A on the basis of the refractive index variation data inputted by the image processing section 38, and displays measurement results at the display 14.

Next, operation of the biosensor 10 relating to the present exemplary embodiment when measuring characteristics of a protein Ta will be described.

When solutions of samples and buffer liquid or the like are to be supplied to the liquid channels 55 of the measurement chip 50, the biosensor 10 causes the infusion head 20 to move to over the cooling section 46, sample setting section 40B, buffer supply section 44B or the like in which solutions to be measured are stored, and aspirates the solutions with the pipette tips CP attached to ones of the pairs of infusion tubes 20A (a total of six). Aspiration quantities at this time are quantities corresponding to two channels, for supply to the pairs of liquid channels 55A and 55R. Then, the pipette tips CP at the six infusion tubes 20A that have aspirated the solutions are inserted into ones (hereinafter referred to as supply apertures 53A) of the entry and exit apertures 53 at the measurement channel 55A side of the measurement chip 50, and the pipette tips CP attached to the six infusion tubes 20A of the row for discharge are inserted into the others (hereinafter referred to as discharge apertures 53B) of the entry and exit apertures 53. Then, half-quantities of the solutions are supplied from the infusion tubes 20A at the supply apertures 53A, and this is implemented by intaking the liquid with the infusion tubes 20A at the discharge apertures 53B. Next, the remaining half-quantities of the solutions in the pipette tips CP are similarly supplied to the reference channel 55R side.

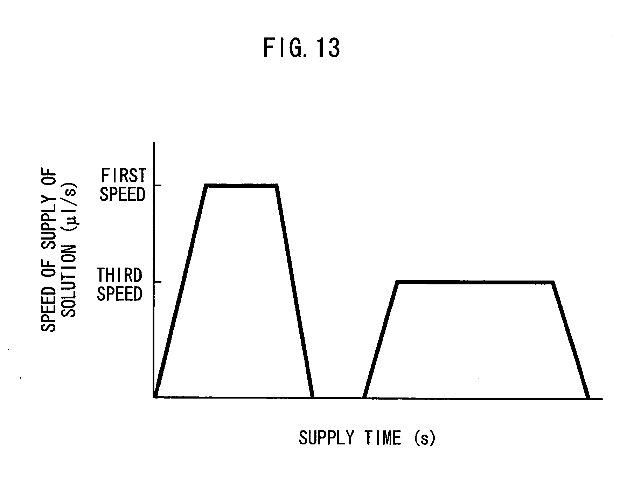

During this supply of the solution to the measurement channels 55A and reference channels 55R of the measurement chip 50, by controlling rotary driving of the first motor 27C and the second motor 28C, as illustrated in Fig. 13, the control section 70 supplies a prescribed quantity of a solution that corresponds with a volume of the liquid channel 55 (for example, 7 µl) at a first speed (for example, 10 µl/s). Thereafter, the supply is stopped for a prescribed time corresponding to diffusion of solution in the vicinity of a wall surface in the liquid channel 55 to the center part of a cross-section of the liquid channel 55 (for example, 5 seconds). Thereafter, control is performed so as to supply a pre-specified quantity of equal to or more than the volume of the liquid channel 55 (for example, 18 µl) at a third speed (for example, 5 µl/s).

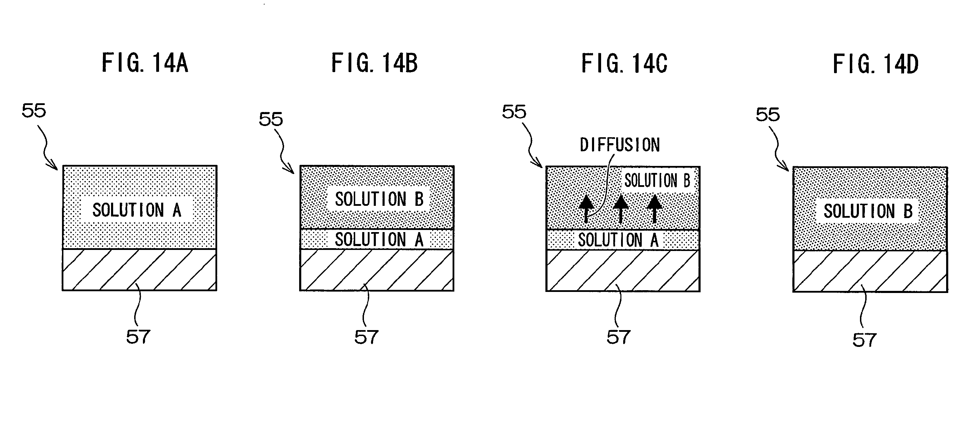

Thus, for example, as shown in Fig. 14A to Fig. 14D, in a case in which the interior of the liquid channel 55 was filled with a solution A (see Fig. 14A), when the above-mentioned prescribed quantity of a solution B is supplied at the above-mentioned first speed, flow of the solution in the liquid channel 55 is in a layered flow state. Therefore, the solution A is replaced with the solution B at the center part of the cross-section of the liquid channel 55 (see Fig. 14B). Then, when the supply of the solution B is stopped for the above-mentioned prescribed time, the solution A in the vicinity of the wall surface in the liquid channel 55 diffuses to the center part of the cross-section of the liquid channel 55 (see Fig. 14C). Thereafter, by the supply of the solution B being supplied, the solution A in the liquid channel 55 is replaced with the solution B (See Fig. 14D).

According to the present exemplary embodiment as described above, after the above-mentioned prescribed quantity of the solution B is supplied, supply of the solution B is stopped for the above-mentioned prescribed time. Consequently, the solution in the liquid channel 55 may be replaced with a small liquid quantity.

Herein, in the present exemplary embodiment a case of the supply of the solution B being temporarily stopped from supplying for the aforementioned prescribed time has been described, but the present invention is not to be limited by this. For example, the solution B may be supplied to the aforementioned prescribed quantity at the aforementioned first speed, and then supplied for the aforementioned prescribed time at a second speed which is slower than the aforementioned first speed (for example, 2 µl/s).

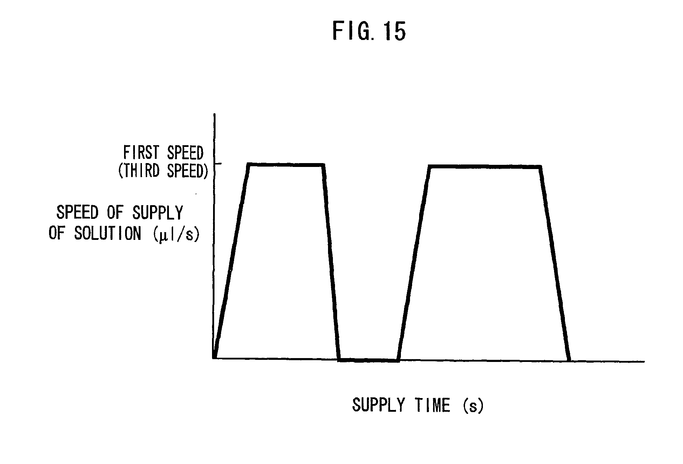

Further, in the present exemplary embodiment a case has been described in which the first speed and the third speed are different, but the present invention is not to be limited by this. For example, as illustrated in Fig. 15, the first speed and the third speed may be the same speed. Moreover, the third speed may be faster than the first speed.

Further again, in the present exemplary embodiment a case has been described in which a quantity corresponding to the volume of the liquid channel 55 serves as the aforementioned prescribed quantity, but the present invention is not to be limited by this.
For example, it is sufficient if the prescribed quantity is a quantity that replaces the solution at least in the channel from the supply aperture 53A at which the solution is supplied to the adherence portion at which the testing substance is adhered, and moreover is preferably kept to not more than the volume of the liquid channel 55.

Further yet, in the present exemplary embodiment a case has been described in which the supply of solution to the liquid channel 55 is temporarily stopped from supplying for the aforementioned prescribed time regardless of the presence or absence of a solution in the liquid channel 55, but the present invention is not to be limited by this. For example, whether or not a solution has been supplied to each liquid channel 55 of each measurement chip 50 may be memorized at the control section 70, and the supply of a solution may be stopped from supplying for the aforementioned prescribed time if the solution is being supplied to a liquid channel 55 to which a solution has already been supplied.

Moreover, a kind of solution that has been supplied to each liquid channel 55 in each measurement chip 50 may be memorized in the control section 70, and the supply of a solution may be stopped from supplying for the aforementioned prescribed time if a solution in a liquid channel 55 is being replaced with a solution of a different kind.

Otherwise, as the measurement apparatus in the present exemplary embodiment, a surface plasmon sensor has been described as an example. However, a measurement apparatus is not limited to being a surface plasmon sensor.

The disclosures of Japanese Patent Application No. 2007-071024 are incorporated into the present specification by reference in their entirety.

## Claims

1. A measurement apparatus comprising:
a channel member in which a channel through which liquid can flow is formed and in which a testing substance to be measured is adhered on a wall surface in the channel;
a supply unit that supplies to the channel a solution to be used in testing of a characteristic of the testing substance; and
a control section that, at a time of replacing the solution in the channel, controls the supply unit so as to
supply the solution to the channel in a prescribed quantity at a first speed,
thereafter supply the solution for a prescribed time at a second speed which is slower than the first speed, and
thereafter supply the solution at a third speed which is faster than the second speed.

2. The measurement apparatus according to claim 1 wherein, at the time of replacing a solution in the channel, the control section controls the supply unit so as to
supply the solution to the channel in the prescribed quantity at the first speed,
thereafter stop supplying the solution for the prescribed time, and
thereafter supply the solution at the third speed.

3. The measurement apparatus according to claim 1 or claim 2, wherein the prescribed time is a time corresponding to diffusion of solution in a vicinity of the wall surface in the channel to a center part of a cross-section of the channel.

4. The measurement apparatus according to any one of claim 1 to claim 3, wherein
the prescribed quantity is a quantity that replaces solution at least from a supply aperture of the channel at which the solution is supplied to an adherence portion at which the testing substance is adhered.

5. The measurement apparatus according to any one of claim 1 to claim 4, wherein
the supply unit respectively separately supplies to the channel solutions of different kinds to be used in measurement of characteristics of the testing substance, and
the control section performs the control at a time of replacing a solution in the channel with a solution of a different kind.

6. A measurement apparatus comprising:
a channel member in which a channel through which liquid can flow is formed and in which a testing substance to be measured is adhered on a wall surface in the channel;
a supply unit that supplies to the channel a solution to be used in testing of a characteristic of the testing substance; and
a control section that, at a time of supplying the solution from the supply unit and replacing the solution in the channel, controls the supply unit so as to, partway through supplying the solution, stop the supply of the solution for a prescribed time.
